# EUROPEAN PATENT APPLICATION

(11) **EP 2 034 784 A2**
(43) Date of publication of application: **11.03.2009**
(21) Application number: 08163297.8
(22) Date of filing: 29.08.2008
(51) Int. Cl.: H04W 48/12

(54) **System and method of edge caching when communicating data**

(30) Priority: 05.09.2007 US 899285
(71) Applicant: Delphi Technologies, Inc., Troy, Michigan 48007 (US)
(72) Inventor: Bolduc, Timothy D., Westfield, IN 46074 (US); Adewunmi, Adegbile O., Noblesville, IN 46062 (US); Hedges, Christopher A., Greentown, IN 46936 (US); Welk, Douglas L., Rossville, IN 46065 (US)
(74) Representative: Denton, Michael John

(57) **Abstract**

A communication system (10) and method (100) for communicating data is provided. The communication system (10) includes at least one base station (12) that transmits common data within a range of the at least one base station and a plurality of nodes (14). The plurality of nodes (14) include at least a first node in communication with at least one of the at least one base station (12) and at least a portion of other nodes of the plurality of nodes (14). At least one of the plurality of nodes (14) are mobile, and the plurality of nodes at least one of advertise the common data available for transmission while within a predetermined area (16) and receive the common data from one of a current node of a plurality of nodes (14) that has current common data and the at least one base station (12).

## Description

### Technical Field

The present invention generally relates to a system and method of communicating data, and ore particularly, a system and method of edge caching when communicating data.

### Background of the Invention

Edge caching is typically used to transmit data using a master database or base station in addition to other nodes. One example of edge caching is an Internet server, where the main server contains the data for a web site and additional secondary servers receive and save the web site data, such that a personal computer can download the web site data from either the main server or a secondary server. Thus, when the web site data is obtained from the secondary server, the amount of bandwidth transmitted by the main server is reduced.

Another type of network that includes multiple points or nodes that transmit data, in combination with a base station, is a mesh network. Typically, in a mesh network, nodes will communicate with one another to transmit data to another node or base station, with which the node cannot directly communicate with. Thus, the middle nodes are generally nodes that receive the data and re-transmit the data to the next node or base station. Generally, nodes in the mesh network transmit the data to a desired location, such that the data propagates through the mesh network until it is received at the desired location.

### Summary of the Invention

According to one aspect of the present invention, a communication system includes at least one base station and a plurality of nodes. The at least one base station transmits common data within a range of the base station. The plurality of nodes includes at least a first node in communication with at least one of the at least one base station and at least a portion of other nodes of the plurality of nodes. At least one of the plurality of nodes are mobile, and the plurality of nodes at least one of advertise the common data available for transmission by that node while in a predetermined area and receive the common data from one of a current node of the plurality of nodes that has current common data and the at least one base station.

According to another aspect of the present invention, a method of communicating data includes the steps of providing at least one base station that transmits common data within a range of the base station, and providing a plurality of nodes, including at least a first node in communication with at least one of the at least one base station and at least a portion of other nodes of the plurality of nodes, wherein at least one of the plurality of nodes are mobile. The method further includes the steps of advertising available common data by at least one of the at least one base station within the range of the base station and a current node of the plurality of nodes while in a predetermined area, wherein the current node has current common data, and requesting the common data by at least the first node, wherein the current node transmits the data, rather than the at least one base station, when the current node has the same requested current common data as the at least one base station.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is an environmental view of a communication system in accordance with one embodiment of the present invention;
Fig. 2 is a diagram of a communication system in accordance with one embodiment of the present invention;
Fig. 3A is a flow chart of a portion of a method for communicating data in accordance with one embodiment of the present invention; and
Fig. 3B is a flow chart of another portion of the method of communicating data in accordance with one embodiment of the present invention.

### Description of Preferred Embodiments

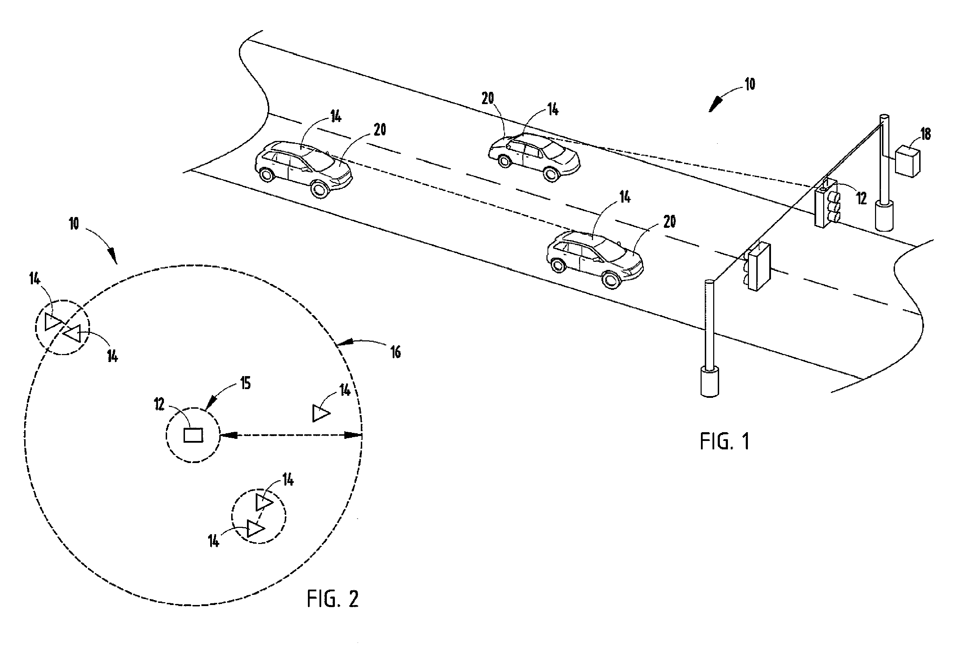

In reference to both Figs. 1 and 2, a communication system is generally shown at reference identifier 10. The communication system 10 is generally illustrated as a vehicle communication system having at least one base station 12 and a plurality of nodes 14 shown on mobile vehicles 20, according to one embodiment. The base station 12 transmits common data within a range 15 of the base station 12. The plurality of nodes 14 communicate the common data within a predetermined area generally indicated at 16, as described in greater detail herein. Typically, the common data relates to an area greater than the predetermined area 16. The plurality of nodes 14 includes at least a first node that is in communication with the base station 12. Typically, at least a portion of the plurality of nodes 14 is in communication with one another. At least one of the plurality of nodes 14 are mobile and may advertise the common data available for transmission from the node 14 and receive common data from a current node of the plurality of nodes 14 that has current common data or from the base station 12, or a combination thereof.

The communication system 10 further includes a network 18 in communication with the base station 12. Updated common data is entered into the communication system 10 through the network 18, which communicates the updated common data to the base station 12. The network 18 can be a computer, server, or other type of memory or database with which data can be entered into and communicated to the base station 12. The common data can be communicated from the network 18 to the base station 12 through a wire connection or a wireless transmission.

By way of explanation and not limitation, a vehicle infrastructure integration (VII) system generally includes roadside equipment (RSE) stationary nodes and on-board equipment (OBE) mobile nodes, which are typically used with vehicles. However, if the mobile nodes only obtain the desired data from the roadside node, then the bandwidth requirements for transmitting data from the roadside node are very large and difficult to obtain. Thus, the communication system 10 uses mobile edge caching so that the current nodes can transmit current common data to nodes 14, and reduce the amount of transmission bandwidth of the base station 12, as described in greater detail herein. Further, if mobile nodes communicate with one another and the roadside node as a typical mesh network, than an excessive amount of data may be transmitted, since data may be transmitted to mobile nodes that already have that data, which inefficiently uses the transmission bandwidth capabilities of the nodes and roadside node. Additionally, nodes of a standard mesh network typically do not advertise the data contained by the node to other nodes of the base station 12 of the mesh network.

According to a disclosed embodiment, the base station 12 and node 14 can include a transceiver for transmitting and receiving signals or data, and a memory device for storing the data the base station 12 or node 14 receives. The base station 12 and node 14 can further include a processor for processing the signals or data that is transmitted and received by the base station 12 and node 14. It should be appreciated by those skilled in the art that the base station 12 and node 14 can include additional suitable hardware and software for signal processing, data storage, displaying the data, the like, or a combination thereof.

According to one embodiment, the predetermined area 16 is defined for at least a portion of the nodes based upon a geographical location of each of the portion of the nodes, such that the predetermined area 16 is an area of any desired size. For purposes of explanation and not limitation, if one node is within the Chicago metropolitan area, the predetermined area 16 can be defined to include the Chicago metropolitan area, a portion of the Chicago metropolitan area, or the Chicago metropolitan area and surrounding areas. According to an alternate embodiment, the predetermined area 16 for at least a portion of the nodes is dynamically defined. By way of explanation and not limitation, the predetermined area 16 can be dynamically defined based upon the data that is being communicated, such as if the node is within the Chicago metropolitan area, the node will advertise, transmit, and/or request data within a predetermined area defined by the Chicago metropolitan area. The node can then dynamically define the predetermined area to include a geographical area greater than the Chicago metropolitan area if, but not limited to, an emergency message is being broadcast, a traffic situation has arising which affects or has the potential to affect an area greater than the Chicago metropolitan area, data that is not specific to the geographical region, or the like.

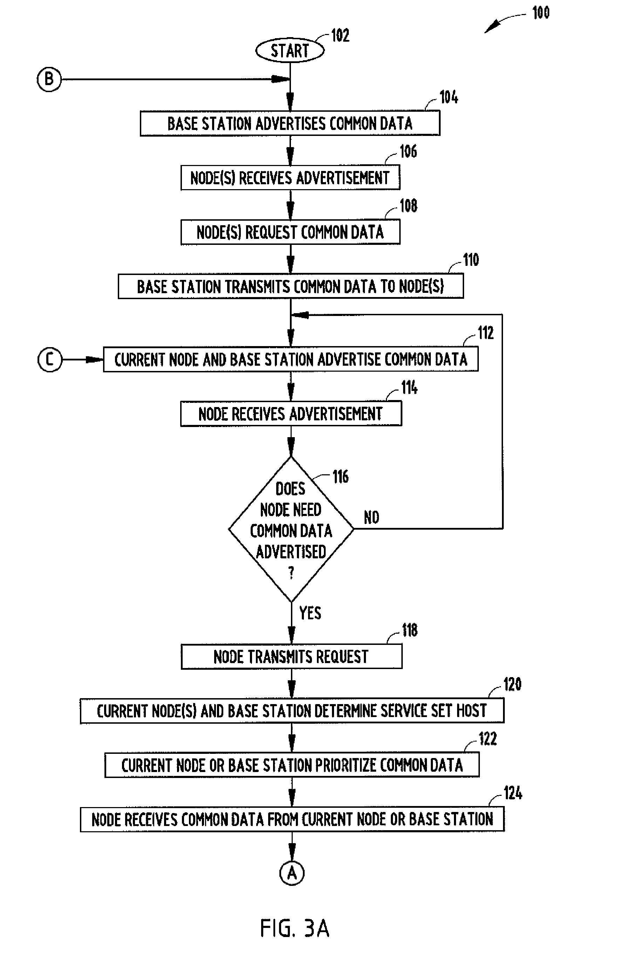

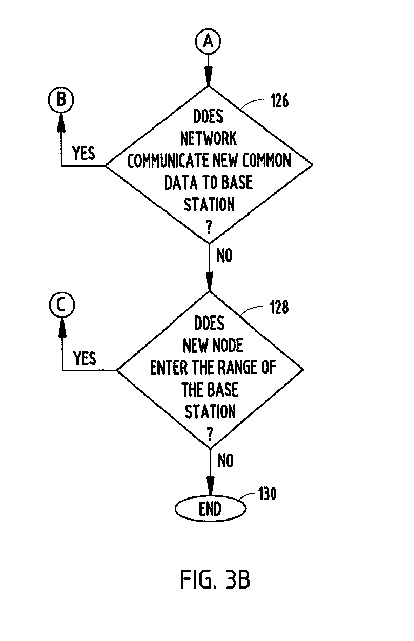

In reference to both Figs. 3A-3B, a method for communicating data is generally shown in Figs. 3A and 3B at reference identifier 100. The method 100 starts at step 102, and proceeds to step 104, where the base station 12 advertises common data, which is described in greater detail herein. At step 106, the node 14 receives the advertisement, and the node 14 requests the common data at step 108. At step 110, the base station 12 transmits the common data to the nodes 14. Typically, the common data is identified by a common designator. For purposes of explanation and not limitation, the common data being communicated relates to geographical data, and the common designator "map for this area" designates different common data, depending upon the location of the base station 12 and node 14.

The nodes 14 that receive the common data from the base station 12 are current nodes until the current nodes are determined to be no longer current, because they contain and can transmit the most current common data. Thus, the current nodes are used for mobile edge caching, and a node 14 made current by receiving data from the base station 12 can make another node 14 current by transmitting the current common data to the node 14. According to one embodiment, the node 14 remains a current node after receiving data from the base station 12 or another current node, until any one of the following events occurs: the current node is outside the geographical area defined by the common data it is advertising; it is within a range 15 of another base station 12; the node 14 is turned off; or a predetermined period of time has expired since the current node has received the current common data.

Typically, the advertisements by the base station 12 and current node are only a few bits in size and contain attributes of the larger common data that can be used by the node 14 to determine whether or not it needs the larger sized common data. By way of explanation and not limitation, when the common data being transferred are maps, the advertisement can include a map identification, a revision number, data size, the like, or a combination thereof. According to one embodiment, in order to reduce the amount of bandwidth used by the base station 12 and node 14 for advertisements, the base station 12 and current node can be configured to not send an advertisement for common data that has already been advertised by another current node, not send common data that is related to geographical areas outside the predetermined area 16, has a lower priority than other common data, limit the number of advertisements per current node, or a combination thereof. However, the base station 12 typically always announces the common data that it has available for transmission in order to ensure that new or updated common data can be sent to all nodes 14 within the range 15 of the base station 12.

Alternatively, a current node within the range 15 of the base station 12 will not advertise its common data, since the base station 12 typically continuously advertises the recent common data. However, if the current node receives a request for the common data within the range of the base station 12, the current node can transmit the common data requested to the node 14, rather than the base station 12 in order to minimize the amount of transmission bandwidth used by the base station 12.

Typically, the common data is broken down into small portions or chunks. The nodes 14 can then obtain the entire data sets in pieces, such that the data is efficiently transmitted in smaller portions with a reduced probability of error than if the common data was transmitted in larger portions. Thus, the nodes 14 assemble or combine the portions or chunks. Alternatively, the base station 12 and current nodes 14 can advertise specific portions or chunks, and the nodes 14 can request the specific portions or chunks.

According to one embodiment, a service set or group of nodes 14 that are within communication range of one another, which have information to share or which require the same information, can determine a service set host, which will transmit the common data to the other nodes 14. Typically, the current nodes and/or the base station 12 within the service set determine the service set host using a ranking algorithm. The higher the ranking score, the more ideal it is for that particular current node to be the service set host. For purposes of explanation and not limitation, the ranking score can be determined by considering the signal strength of the requesting node 14, the amount of the requested data the current node can provide, the position and velocity of the requesting node 14, the like, or a combination thereof. The transfer of the common data can occur as a single stream of bytes or in a predetermined portion size. The base station 12 is typically assigned the lowest ranking score, so that any current node that is capable of communicating the common data will transmit the common data to the other nodes 14, rather than the base station 12 in order to minimize the transmission bandwidth of the base station 12. It should be appreciated by those skilled in the art that the current node can be considered no longer current, such as based upon the above algorithm, and the method 100 continues using the base station 12 or another current node to replace the no longer current node, if necessary.

At step 112, the current node and base station 12 advertise the common data, and at step 114, the node 14 receives the advertisement. At decision step 116, it is determined if the node 14 needs the common data advertised. If it is determined that the node 14 does not need the common data advertised, then the method 100 returns to step 112. However, if it is determined at decision step 116 that the node 14 needs the common data advertised, the method 100 proceeds to step 118, where the node 14 transmits a request.

At step 120, the current nodes and the base station 12 determine the service set host, and at step 122, the current node or base station 12 prioritize the common data, so that the data with the highest priority is transmitted first. The node 14 receives the common data from the current node or base station 12 at step 124.

At step 126, it is determined if the network 18 has communicated new data to the base station 12. If the network 18 has communicated new current data to the base station 12, the method 100 returns to step 104, where the base station 12 advertises the common data. However, if at decision step 126, it is determined that the network 18 has not communicated new common data to the base station 12, then the method 100 proceeds to decision step 128. At decision step 128, it is determined if the new node 14 has entered the range 15 of the base station 12. If a new node 14 has entered the range 15, then the method 100 returns to step 112, where the current node and base station 12 advertise the common data. However, if it is determined at decision step 128 that a new node 14 has not entered the range 15, then the method 100 ends at step 130.

Typically, in order for a node 14 to request the common data based upon an advertisement, the node 14 must receive the advertisement, and determine if the common data advertised is needed by the node 14. In an alternate embodiment, the node 14 can determine the common data needed without hearing advertisements based upon an intelligent decision by the node 14 as to the data that should be requested. According to a disclosed embodiment, the intelligent decision can be based upon the desired route generated by a navigation function or device. Alternatively, the intelligent decision can be algorithmically determined based upon parameters dependent upon the data being communicated, the predetermined area of communication, manually entered parameters, the like, or a combination thereof. Thus, the node 14 intelligently determines what data is still needed, and sends a request for such common data.

According to one embodiment, the request contains common data identification, specific portions of the common data requested, the position and velocity of the requesting node 14, the like, or a combination thereof. When the position and velocity are transmitted from the node 14 during the request, the position and velocity of the node 14 can be used to determine the service set host. By way of explanation and not limitation, if a node 14 sends out a request and two nodes are capable of being the service set host, the current node that is traveling in substantially the same direction and same speed as the requesting node 14, will most likely be the service set host, rather than a current node that is traveling in the opposite direction as the requesting node 14, since the nodes 14 traveling in the same direction will remain within communication range with one another for a longer period of time.

According to one embodiment, the intelligent decision by the node 14 can be used as an algorithm based upon determining statistically high community data, such that if the data is requested, there is a high probability that a current node will have the data. By way of explanation and not limitation, statistically high community data is current common data relating to a map for a geographic location within twenty (20) miles of the present location of the node, or current common data relating to a song on the current Top 40 list. Thus, a current node is statistically more likely to have a song in the Top 40 list than an older song not on the Top 40 list. The algorithm can be based upon statistically high community data so that the node 14 does not use bandwidth making an intelligent request for data which it is unlikely that a current node has, when compared to more prevalent current common data.

According to a disclosed embodiment, when the current node is transmitting the common data to a node 14, the service set is maintained until all of the requesting nodes 14 have received the common data, a predetermined time period has expired with no communication, higher priority communications have become necessary, power is removed, or a combination thereof. When such parameters are used, and the service set host and the requesting nodes 14 move out of range of one another, the above algorithm will end the service set and another service set will be formed.

Alternatively, a new service set could begin to be set up, as the nodes 14 in the current service set begin to move out of range of one another. Further, any requesting node 14 that has received the common data and has become a current node can be required to stay within the service set to participate as a current node and provide the common data to the requesting nodes 14. Additionally, if a requesting node 14 enters the service set after the service set host has begun transmitting the current common data, the late arriving node 14 can request the service host to keep the service set active and request the data that it missed. According to yet another embodiment, nodes 14 can participate in multiple service sets simultaneously with different roles in each service set.

By way of explanation and not limitation, in operation, the nodes 14 are used on vehicles 20 in one exemplary embodiment, and the base stations 12 are stationary along the roadside. The common data that is transmitted may include geographical data, such as maps, current traffic conditions, current weather conditions, the like, or a combination thereof. The current nodes are used for mobile edge caching in order to minimize the transmission bandwidth used by the base station 12. Thus, the nodes 14 can communicate common data in the predetermined area 16, such that a node 14 receives the common data prior to being within the range 15 of the base station 12. Further, by using algorithms that limit the amount of transmissions (i.e., advertising and requesting), the amount of transmission bandwidth of the nodes 14 is also minimized. Alternatively, other types of data can also be transmitted using the communication system 10 and method 100, such as music, other entertainment data, or other forms of data that can be transmitted through wireless communication.

As the node 14 enters the predetermined area 16, the node 14 will receive advertisements for the common data, and determine if the node 14 needs the common data. Thus, as the node 14 enters the predetermined area 16, it can determine if the node 14 needs the maps or other common data, which is being transmitted by the current nodes. Therefore, the nodes 14 can receive the common data for the predetermined area 16 with which it is in and other predetermined areas 16, if current nodes contain such data of other predetermined areas 16. Additionally, the data being transferred can be prioritized based upon location and the type of data (e.g., maps, music, etc.).

By way of explanation and not limitation, the system 10 and method 100 may be used in conjunction with a Worldwide Interoperability for Microwave Access (WiMAX) system. Generally, WiMAX is designed to promote conformance of the IEEE 802.16 standard, and to provide wireless data over a distance. However, WiMAX is generally designed to function using cellular communication technology in a defined area. Thus, the system 10 and method 100 could be used with a WiMAX system in order to provide data to mobile nodes 14 while using the mobile nodes 14 for mobile edge caching in order to reduce the transmission bandwidth of the base station 12.

Advantageously, the communication system 10 and method 100 transmit common data to and from mobile nodes using an edge caching technique, such that current nodes transmit the common data in order to minimize the transmission bandwidth of the base station 12. Also, the base station 12 and current nodes advertise the common data that is available in a reduced size in order for the nodes 14 to determine if such common data is needed. Thus, the common data is not being continuously transmitted from one node 14 to another node 14 as a mesh network 18, but the common data is typically transmitted only to those nodes 14, which determine such common data, as needed, and request the common data.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A communication system (10) comprising:
at least one base station (12) that transmits common data within a range (15) of said at least one base station (12); and
a plurality of nodes (14) including at least a first node in communication with at least one of said at least one base station (12) and at least a portion of other nodes of said plurality of nodes (14), wherein at least one of said plurality of nodes (14) are mobile and said plurality of nodes at least one of advertise said common data available for transmission while in a predetermined area (16) and receive said common data from one of a current node of said plurality of nodes (14) that has current said common data and said at least one base station (12).

2. The communication system (10) of claim 1 further comprising at least one network (18) in communication with said at least one base station (12), wherein updated common data is entered into said at least one network (18) and communicated to said at least one base station (12).

3. The communication system (10) of claim 1, wherein said current node has transmission priority over said at least one base station (12) so that said current node transmits said common data to said plurality of nodes (14) rather than said at least one base station (12) when said current node has current said common data.

4. The communication system (10) of claim 1, wherein said current node advertises said common data while in said predetermined area (16) to said plurality of nodes (14), and at least one other node of said plurality of nodes (14) receives said advertisement and transmits a request to said current node for said common data.

5. The communication system (10) of claim 1, wherein at least one of said plurality of nodes (14) intelligently requests said current common data from at least one of said at least one base station (12) and said current node.

6. The communication system (10) of claim 1, wherein said at least one base station (12) and said current node prioritizes said common data to be transmitted by said at least one base station (12) and said current node based upon at least one of an association of said common data and said predetermined area (16) and a type of common data being transmitted.

7. The communication system (10) of claim 1, wherein at least one of said plurality of nodes (14) receive a second set of common data from a second base station of said at least one base station (12) when said plurality of nodes (14) enter a second predetermined area (16), such that transmitted said second set of common data is prioritized based upon an association between said second set of common data and said second predetermined area (16).

8. The communication system (10) of claim 1, wherein said at least one base station (12) is stationary and one node of said plurality of nodes (14) is connected to a vehicle (20).

9. A method of communicating data (100), said method (100) comprising the steps of:
providing at least one base station (12), wherein said at least one base station (12) transmits common data within a range (15) of said at least one base station (12);
providing a plurality of nodes (14) including at least a first node in communication with at least one of said at least one base station (12) and at least a portion of other nodes of said plurality of nodes (14), wherein at least one of said plurality of nodes (14) are mobile;
advertising (106,112) available said common data by at least one of said at least one base station (12) within said range (15) and a current node within a predetermined area (16) of said plurality of nodes (14), wherein said current node has current said common data; and
requesting (108,118) said common data by at least said first node, wherein said current node transmits said data rather than said at least one base station (12) when said current node has the same requested said current common data as said at least one base station (12).

10. The method (100) of claim 9 further comprising the step of providing at least one network (18) in communication with said at least one base station, wherein updated common data is entered (126) into said at least one network (18) and communicated to said at least one base station (12).

11. The method (100) of claim 9, wherein said request (108,118) of said common data includes at least one of said position and velocity of said at least one other node.

12. The method (100) of claim 9 further comprising the step of prioritizing said common data to be transmitted by said current node and said at least one base station (12) based upon at least one of an association of said common data and said predetermined area (16) and a type of common data being transmitted.

13. The method (100) of claim 9 further comprising the step of receiving a second set of common data by at least one of said plurality of nodes (14) from a second base station of said at least one base station (12) when said plurality of nodes enter a second predetermined area (16).

14. The method (100) of claim 9 further comprising the step of determining a service set host (120) between at least said current node and said at least one base station (12).

15. The method (100) of claim 9 further comprising the step of providing a vehicle (20), wherein one node of said plurality of nodes (14) is connected to said vehicle (20) and said at least one base station (12) is stationary.

16. The method (100) of claim 9 further comprising the step of dynamically defining said predetermined area.
